# EUROPÄISCHE PATENTSCHRIFT

(11) **EP 0 912 394 B1**
(45) Veröffentlichungstag und Bekanntmachung des Hinweises auf die Patenterteilung: **24.05.2006**
(21) Anmeldenummer: 98913730.2
(22) Anmeldetag: 18.03.1998
(51) Int. Cl.: B64C 1/20, B65G 39/02

(54) **KUGELMATTE**
BALL MAT
TAPIS A BILLES

(30) Priorität: 24.03.1997 DE 19712279
(43) Veröffentlichungstag der Anmeldung: 06.05.1999
(73) Patentinhaber: Telair International GmbH, 83734 Hausham (DE)
(72) Erfinder: HUBER, Thomas, D-82393 Iffeldorf (DE); DÜRRWAECHTER, Martin, D-83737 Irschenberg (DE); PATZLSPERGER, Andreas, D-83666 Waakirchen (DE)
(74) Vertreter: Bohnenberger, Johannes
(86) Internationale Anmeldenummer: PCT/EP1998/001585
(87) Internationale Veröffentlichungsnummer: WO 1998/042566

(56) Entgegenhaltungen:
- DE-B- 1 189 923
- US-A- 3 020 993
- US-A- 3 902 583
- US-A- 4 000 870
- US-A- 4 077 590
- HUBER JUNIOR THOMAS: "Modular microcompressor-controlled cargo system" AEROSPACE ENGINEERING, Bd. 10, Nr. 2, Februar 1990, WARRENDALE, PENNSYLVANIA, Seiten 37-40, XP002067738

## Beschreibung

Die Erfindung betrifft eine Kugelmatte für das Verladedeck eines Flugzeugs zur Aufnahme und zum Verschieben von Fracht.

Bekannte Kugelmatten umfassen eine Deckplatte und eine Bodenplatte, die im wesentlichen parallel zur Deckplatte verläuft. Weiterhin sind Halterungen vorgesehen, in die Kugeln oder Kugelelemente einsetzbar sind, wobei die Deckplatte zum Einsetzen der Kugeln oder Kugelelemente Öffnungen aufweist und wobei zwischen Deckplatte und Bodenplatte ein Innenraum definiert ist, in dem die Halterungen eingesetzt sind.

Die mit einem Segment über die Deckplatte vorragenden Kugeln definieren mit ihren obersten Punkten eine Ebene, auf der Fracht mit ganz geringen Reibungsverlusten verschoben werden kann.

Die Aufgabe der vorliegenden Erfindung besteht darin, die Widerstandsfähigkeit der Kugelmatte für ihren Einsatz im Flugzeug bei dennoch geringem Eigengewicht zu verbessern.

Diese Aufgabe wird gelöst mit einer Kugelmatte nach den Merkmalen des Patentanspruches 1, 2 oder 3.

Ein Vorteil bei den drei vorgeschlagenen Lösungen besteht zunächst darin, daß die Kugelmatte versteift wird, ohne daß ihr Eigengewicht nennenswert erhöht wird.

Ein weiterer Vorteil besteht darin, daß die Kugelmatte durch die vorgeschlagenen Lösungen auf einfache Weise spritzwasserdicht oder spritzwasserabweisend ausgebildet werden kann.

Nach einem ersten Aspekt der vorliegenden Erfindung ist die Kugelmatte in dem zwischen Deckplatte, Bodenplatte und Halterungen verbleibenden Teil des Innenraums ausgeschäumt oder mit einem geschäumten Körper ausgefüllt. Durch das Ausschäumen und den dadurch gebildeten geschäumten Körper können vertikale, auf die Deckplatte ausgeübte Belastungen aufgenommen werden. Wenn die Kugelmatte ausgeschäumt wird, kann die Materialstärke der Deckplatte unter Umständen verringert werden.

Außerdem kann bei einem so gefüllten Innenraum dem Eindringen bzw. Ausbreiten von Feuchtigkeit entgegengewirkt werden.

Nach einem zweiten Aspekt der vorliegenden Erfindung stehen die in Öffnungen in der Deckplatte eingesetzten Halterungen für die Kugeln oder Kugelelemente direkt auf der Bodenplatte der Kugelmatte auf, so daß über die Halterungen Deck- und Bodenplatte miteinander verbunden sind und die Halterungen als Beabstandungs- und Versteifungselemente für die Kugelmatte wirken. Durch diese Maßnahme werden die auf die Kugelelemente übertragenen Belastungen sowohl von der Deckplatte als auch der Bodenplatte gleichzeitig aufgenommen, so daß die eingeleiteten Belastungen gleichmäßig verteilt werden.

Nach einem dritten Aspekt der vorliegenden Erfindung sind die an den seitlichen Rändern der Kugelmatte angeordneten Seitenprofile zwischen der Deckplatte und der Bodenplatte - als Beabstandungs- und Versteifungselemente - eingesetzt. Die Seitenprofile weisen jeweils zwei gegenüberliegend angeordnete, sich entlang ihrer Längsrichtung erstreckende Anlageflächen auf, die jeweils mit den dem Innenraum zugewandten Innenseiten von Deckplatte und Bodenplatte flächig in Anlage kommen, derart, daß (neben der Versteifung) eine im wesentlichen spritzwasserdichte Abdichtung zwischen den Seitenprofilen einerseits und der Deckplatte bzw. Bodenplatte andererseits geschaffen wird.

Eine Verklebung der Teile miteinander erhöht die Steifigkeit/Festigkeit und wirkt einem Flüssigkeitseintritt noch zusätzlich entgegen. Eine Verklebung ist besonders dann sinnvoll, wenn auf ein Ausschäumen des Hohlraums verzichtet wird.

Es versteht sich von selbst, daß die drei unabhängig beanspruchten verschiedenen Maßnahmen zur Erhöhung der Widerstandsfähigkeit der Kugelmatte auch jeweils paarweise oder allesamt kombiniert werden können. So erscheint beispielsweise eine Kugelmatte besonders zweckmäßig, bei der der Innenraum wie beschrieben ausgeschäumt ist und gleichzeitig die Seitenprofile der Kugelmatte mit den Innenseiten von Deckplatte und Bodenplatte in flächige Anlage kommen.

In einer vorteilhaften Weiterbildung des dritten Aspekts schließen die Seitenprofile an ihrer Oberseite und/oder ihrer Unterseite bündig mit den Außenseiten von Deckplatte bzw. Bodenplatte ab. Dadurch ergibt sich an der Außenfläche ein glatter Übergang zwischen Deckplatte, Seitenprofilen und Bodenplatte. Die Kugelmatte erhält dadurch eine besonders glatte und kompakte Form. Für eine mechanische Beschädigung der spritzwasserdichten Abdichtung zwischen Seitenprofilen einerseits und Deckplatte bzw. Bodenplatte andererseits wird keine Angriffsfläche geboten.

Bei allen angegebenen Aspekten ist es von Vorteil, wenn die Halterungen für die Kugeln oder Kugelelemente Einrichtungen zur Abdichtung gegenüber der Deckplatte und/oder der Bodenplatte aufweisen. Diese Einrichtungen zur Abdichtung verhindern, daß über die Kugelelemente eingedrungene Flüssigkeit sich im verbleibenden Innenraum der Kugelmatte verteilen kann. Vielmehr kann die Anordnung so getroffen werden, daß Flüssigkeit durch das Kugelelement nach unten abfließt und durch eine direkt unterhalb des Kugelelements angeordnete Bohrung in der Bodenplatte nach außen tritt.

Zu diesem Zweck können die Einrichtungen zur Abdichtung gegenüber der Bodenplatte durch einen an der Halterung vorgesehenen ringförmigen, konzentrisch zur Achse (A) der Halterung verlaufenden Vorsprung gebildet werden. Ein derartiger ringförmiger Vorsprung ist aber nicht nur unter dem Gesichtspunkt der Abdichtung zweckmäßig; durch einen ringförmigen Vorsprung werden die auf das Kugelelement übertragenen Belastungen auf einen relativ großen Bereich der Bodenplatte der Kugelmatte verteilt.

Auch bei den Halterungen kann ein Verkleben mit der Deck- bzw. Bodenplatte die Steifigkeit erhöhen und einem Flüssigkeitseintritt in den Hohlraum noch zusätzlich entgegenwirken.

Die Erfindung wird nachstehend auch hinsichtlich weiterer Merkmale und Vorteile anhand der Beschreibung eines Ausführungsbeispiels und unter Bezugnahme auf die beiliegenden Zeichnungen näher erläutert.

Hierbei zeigen:
- Fig. 1: eine Ausführungsform einer Kugelmatte in perspektivischer Ansicht von oben;
- Fig. 2: eine Schnittansicht entlang der Linie II-II in Fig. 1;
- Fig. 3: einen vergrößerten Ausschnitt der Schnittansicht nach Fig. 2;
- Fig. 4: die Kugelmatte in perspektivischer Ansicht schräg von unten;
- Fig. 5: die Kugelmatte in einer Schnittansicht entlang der Linie V-V in Fig. 1;
- Fig. 6: eine abgewandelte Ausführungsform einer Kugelmatte in perspektivischer Ansicht von oben;
- Fig. 7: eine Explosionsansicht der Kugelmatte aus Fig. 6;
- Fig. 8: eine Schnittansicht entlang der Linie VIII-VIII in Fig. 6 und
- Fig. 9: eine vergrößerte Ansicht von Seitenprofilen, Innenund Außenecken der dargestellten Ausführungsformen.

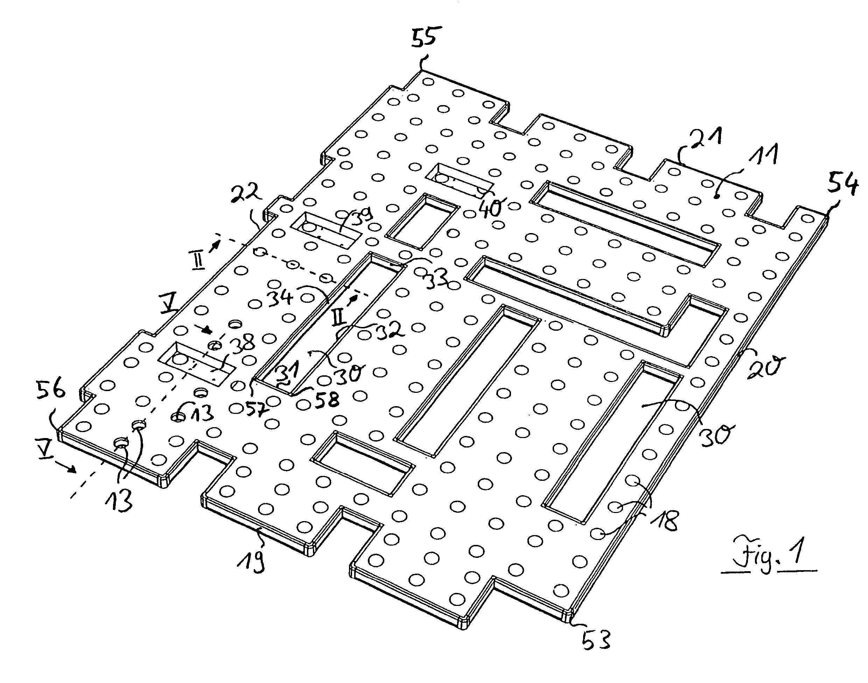

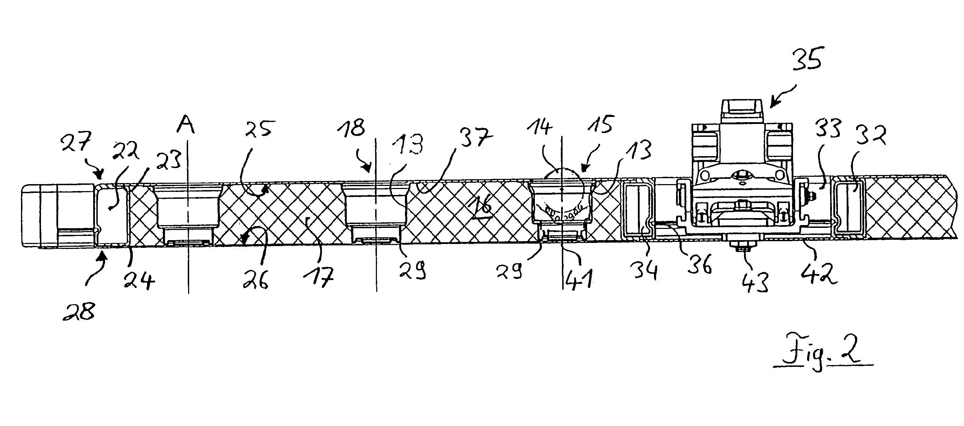

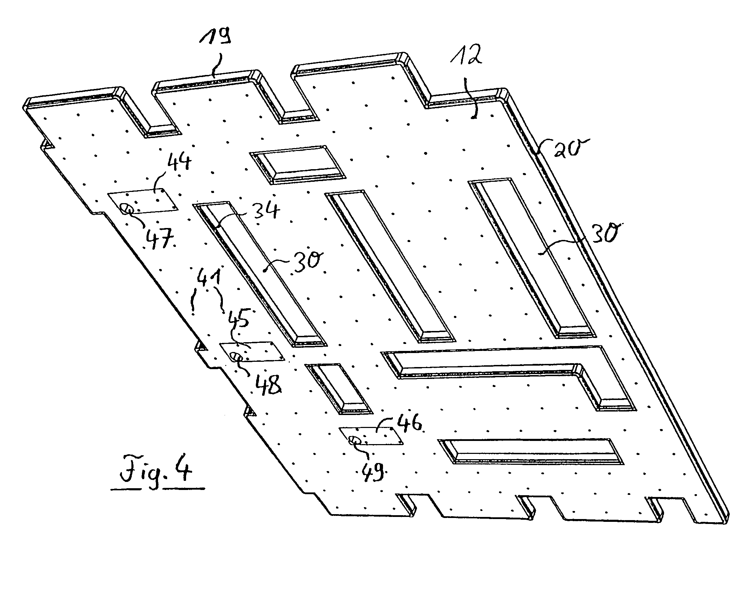

In Fig. 1 ist eine Ausführungsform einer Kugelmatte in perspektivischer Ansicht schräg von oben dargestellt. Die Kugelmatte umfaßt eine Deckplatte 11 und eine parallel dazu angeordnete Bodenplatte 12 (vgl. Fig. 2). Seitlich wird die Kugelmatte durch Seitenprofile 19, 20, 21, 22 begrenzt. Die Seitenprofile 19, 20, 21, 22 sind über entsprechende Außenecken 53, ..., 56, die in die Seitenprofile einsteckbar sind, verbunden. Durch diese Technik ergeben sich bei entsprechender Abwandlung von Deckplatte 11 und Bodenplatte 12 nahezu undendlich viele Möglichkeiten in der Gestaltung der Kugelmatten-Konturen und -Ausschnitte (Baukasten-System).

Zwischen Deckplatte 11, Bodenplatte 12 und Seitenprofilen 19, ..., 22 wird ein Innenraum 16 definiert. Von Öffnungen 18 in der Deckplatte 11 her sind mehrere Halterungen 13 für Kugelelemente 15 (vgl. Fig. 2) in den Innenraum 16 eingesetzt. Entsprechende Kugelelemente sind beispielsweise in der DE 38 05 494 näher beschrieben.

Der verbleibende Teil des Innenraums 16 ist bei der hier gezeigten Ausführungsform ausgeschäumt, so daß im Innenraum 16 der Kugelmatte ein geschäumter Körper 17 ausgebildet wird. Der geschäumte Körper 17 versteift die Kugelmatte, dämpft Vibrationen und verhindert, daß sich Feuchtigkeit oder Flüssigkeiten im Innenraum 16 ausbreiten.

Prinzipiell kann der Innenraum 16 zwischen Deckplatte 11 und Bodenplatte 12 auch mit anderen Materialien (z.B. Balsaholz, speziellen Aluminium Wabenkernen oder ähnlichem) ausgefüllt werden.

Die in Fig. 1 dargestellte Kugelmatte weist weiterhin drei Wannen 38, 39, 40 auf, die zum Einbau von Antriebseinheiten 50 vorgesehen sind.

Darüber hinaus weist die Kugelmatte eine Mehrzahl von Aussparungen 30 auf, die den Einsatz von Riegelelementen 35 gestatten. Die Riegelelemente 35 sind zum Arretieren der Fracht auf der Kugelmatte vorgesehen.

Der Aufbau der in Fig. 1 dargestellten Kugelmatte wird aus der in Fig. 2 gezeigten Schnittansicht entlang der Linie II-II in Fig. 1 noch besser verständlich. Zwischen der Deckplatte 11 und der Bodenplatte 12 sind die bereits erwähnten Halterungen 13 für die Kugelelemente 15 eingesetzt, die eine im wesentlichen topfförmige zylindrische Form aufweisen. Die Halterungen 13 sind korrespondierend zu den Öffnungen 18 in der Deckplatte 11 in die Kugelmatte eingesetzt. Die Halterungen 13 weisen zur Unterseite der Deckplatte 11 hin Einrichtungen 37 zur Abdichtung auf, um eine - vorzugsweise wenigstens spritzwasserdichte - Abdichtung zwischen Deckplatte 11 und Halterung 13 zu schaffen. Die Einrichtungen 37 zur Abdichtung sind hier in Form eines umlaufenden Kragens am oberen Rand der Halterung 13 ausgebildet, wobei sich der umlaufende Kragen flächig an die Deckplatte 11 von unten her anlegt.

Die Halterung 13 für das in Fig. 2 nur schematisch angedeutete Kugelelement 15 steht an der Bodenplatte 12 mit einem ringförmigen Vorsprung 29 bzw. einem umlaufenden Kragen auf. Aus dem Kugelelement 15 ragt ein oberes Segment einer drehbar gelagerten Kugel 14 nach oben vor. Konzentrisch zur Halterung 13 ist in der Bodenplatte 12 eine Bohrung 41 vorgesehen, die zum Ablauf von Flüssigkeit, die gegebenenfalls in das Kugelelement 15 eingedrungen ist, dient. Das Kugelelement 15 weist im unteren Bereich eine entsprechende Bohrung auf, die das Ablaufen von eingedrungener Flüssigkeit gestattet.

Durch die beschriebene Anordnung der Halterung 13 zwischen Deckplatte 11 und Bodenplatte 12 werden vertikal auf die Kugelmatte übertragene Belastungen auf die Halterung 13 übertragen und gleichmäßig in die Kugelmatte eingeleitet, insbesondere auf die Bodenplatte 12 übertragen.

Die Kugelmatte ist in der dargestellten Schnittansicht durch eine Aussparung 30 unterbrochen. Die Aussparung 30 wird durch Seitenprofile 31, ..., 34 begrenzt (vgl. auch Fig. 1), welche die Kugelmatte spritzwasserdicht abschließen und an dem entsprechenden Randbereich versteifen.

Die Aussparung 30 ist nach unten hin durch eine Befestigungsplatte 42 verschlossen, die über einen Bereich an der Unterseite der Seitenprofile 31, ..., 34 mit den Seitenprofilen 31, ..., 34 beispielsweise durch Blindnieten verbunden ist. Auf der Befestigungsplatte 42 ist ein bereits erwähntes Riegelelement 35 angeordnet. Das Riegelelement 35 dient dazu, Fracht auf der Kugelmatte zu arretieren. Gleichzeitig wird die Kugelmatte über das Riegelelement 35, und zwar über einen mit dem Riegelelement 35 verbundenen Bolzen 43 am Boden des Flugzeugs befestigt.

Die Kugelmatte wird also über die Befestigungsplatte 42 (und das Riegelelement 35) am Boden des Flugzeugs befestigt. Diese relativ indirekte Befestigung bewirkt, daß zur Deckplatte parallel verlaufende Querkräfte und Schwingungen nur gedämpft auf den gegen solche Beanspruchung relativ empfindlichen Flugzeugboden übertragen werden. Auch direkt auf das Riegelelement 35 ausgeübte seitliche Kräfte werden durch die auch für das Riegelelement 35 stabilisierend wirkende Befestigungsplatte 42 gedämpft.

Die Seitenprofile 19, ..., 22 weisen zur Innenseite der Aussparung hin eine umlaufende Nut 36 auf, die zum rastenden Einsetzen eines nicht gezeigten Verschlußdeckels vorgesehen ist. Mit einem solchen Verschlußdeckel lassen sich nicht benötigte Aussparungen 30 verschließen.

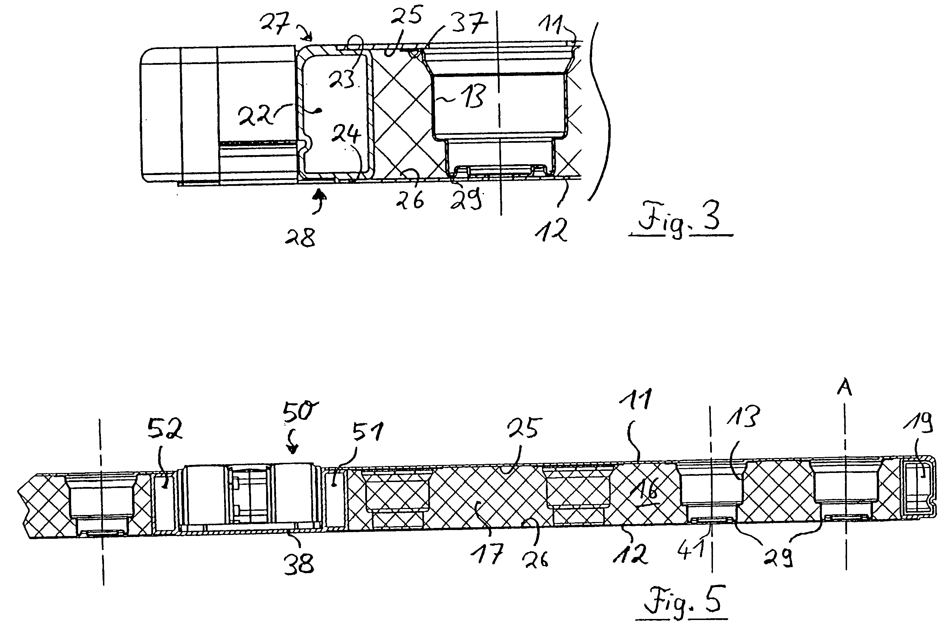

Das den äußeren Rand der Kugelmatte begrenzende Seitenprofil 22 ist zu den die Aussparung 30 begrenzenden Seitenprofilen 31, ..., 34 entsprechend ausgebildet. Zur näheren Erläuterung wird auf Fig. 3 verwiesen.

In Fig. 3 ist der linke Teil der Schnittansicht aus Fig. 2 vergrößert dargestellt. Das Seitenprofil 22 weist eine Oberseite 27 und eine Unterseite 28 auf, wobei das Seitenprofil an der Oberseite 27 und Unterseite 28 jeweils bündig mit der Deckplatte 11 bzw. der Bodenplatte 12 abschließt. Auf der der Kugelmatte zugewandten Seite weist das Seitenprofil 22 an seiner Oberseite 27 und seiner Unterseite 28 plan ausgebildete Anlageflächen 23, 24 auf. Dabei liegt die Deckplatte 11 und die Bodenplatte 12 derart auf den Anlageflächen 23, 24 am Seitenprofil 22 auf, daß das Seitenprofil 22 sich zum Teil zwischen Deckplatte 11 und Bodenplatte 12 hineinerstreckt.

Die plan ausgebildeten Anlageflächen 23, 24, die sich in Längsrichtung des Seitenprofils 22 erstrecken, kommen jeweils mit den Innenseiten 25, 26 von Deckplatte 11 und Bodenplatte 12 in Anlage und bewirken so eine spritzwasserdichte Abdichtung. Weiterhin wird die Kugelmatte an ihren Rändern durch die so angeordneten Seitenprofile verstärkt.

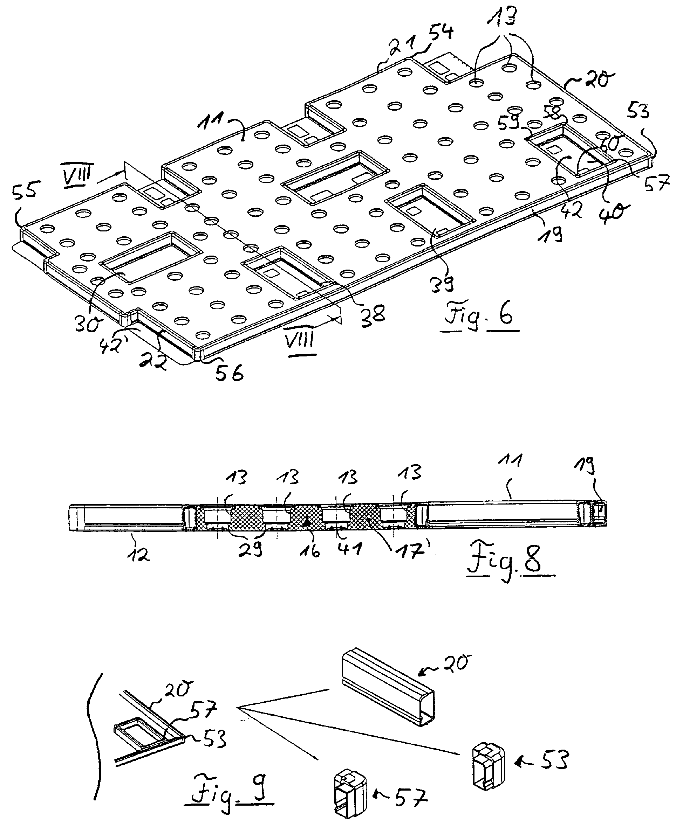

In Fig. 4 ist die Kugelmatte aus Fig. 1 in einer perspektivischen Ansicht schräg von unten dargestellt. Zu erkennen ist zunächst die Bodenplatte 12, in der korrespondierend zu den Halterungen 13 für die Kugelelemente 15 Bohrungen 41 vorgesehen sind. Die Bohrungen 41 gestatten den Ablauf von Flüssigkeiten, die gegebenenfalls in die Kugelelemente bzw. Halterung gelangt sind. Weiterhin sind in Fig. 4 die den Wannen 38, 39, 40 zugeordneten Unterseiten 44, 45, 46 erkennbar. In die Unterseiten 44, 45, 46 der Wannen 38, 39, 40 sind Öffnungen 47, 48, 49 eingearbeitet, die das Durchführen von Kabeln für die jeweilige Antriebseinheit gestatten.

In Fig. 5 ist ein Teil der Kugelmatte in einer Schnittansicht entlang der Linie V-V in Fig. 1 dargestellt, wobei sich die Schnittansicht durch eine Wanne 38 für eine Antriebseinheit 50 erstreckt, die in Fig. 5 ebenfalls dargestellt ist. Die Wanne 38 für die Antriebseinheit 50 ist - wie aus Fig. 5 erkennbar - einstückig ausgebildet, wobei Seitenprofile 51, 52 der Wanne vollständig zwischen die Deckplatte 11 und die Bodenplatte 12 eingeschoben sind.

In Fig. 6 ist eine abgewandelte Ausführungsform einer Kugelmatte in perspektivischer Ansicht von oben dargestellt. Gleiche oder zur Kugelmatte nach den Fig. 1 bis 5 entsprechende Bauteile sind der Übersichtlichkeit halber mit denselben Bezugszeichen gekennzeichnet. In Fig. 6 ist die Kugelmatte im zusammengebauten Zustand gezeigt. Bei dieser Ausführungsform ist der Hohlraum 16 nicht ausgeschäumt, sondern mit einem Füllkörper (z. B. Balsaholz) ausgefüllt. Um das Eindringen von Flüssigkeiten mit Sicherheit zu verhindern, sind hier alle Teile miteinander verklebt bzw. gegeneinander abgedichtet. Die Deckplatte 11 kann, um eine sichere Trittfläche zu bieten, mit Non-Slip-Decklack lackiert sein.

In Fig. 7 ist die Kugelmatte nach Fig. 6 in Explosionsansicht dargestellt. Diese Darstellungsform zeigt, wie die Kugelmatte nach dieser Ausführungsform zusammengebaut wird. Die Darstellungsweise läßt darüber hinaus erkennen, wie die Kugelmatten-Konturen und -Ausschnitte auf einfache Weise variiert werden können und den Gegebenheiten angepaßt werden können.

Zuoberst ist die Deckplatte 11 gezeigt, die hier aus einem 1,5 mm dicken Blech besteht. Die Form der Deckplatte 11 läßt sich durch Laserschneiden bzw. Stanzen ausbilden. Die Halterungen 13 bzw. die Seitenprofile 19, ..., 22 und 31, ..., 34 werden mit der Deckplatte vernietet bzw. verklebt.

Unterhalb der Deckplatte 11 sind die Halterungen 13 dargestellt. Darunter ist der Füllkörper 17 zu erkennen, der bei dieser Ausführungsform aus Balsaholz besteht. Die darunter dargestellten Seitenprofile 19, ..., 22 und 31, ..., 34 sind entsprechend der Außenkontur der Deckplatte 11 bzw. der Bodenplatte 12 über Außenecken 53, ..., 56 bzw. Innenecken 57, ..., 60 miteinander verbunden (Baukastensystem). Ganz unten in Fig. 7 sind auch verschiedene Befestigungsplatten 42, 42' erkennbar, die mit der Bodenplatte 12 vernietet werden. Sie dienen einerseits zur Befestigung der Kugelmatte am Flugzeugboden und andererseits zur Montage von Riegelelementen, Antriebseinheiten oder dergleichen.

In Fig. 8 ist eine Schnittansicht entlang der Linie VIII-VIII in Fig. 6 dargestellt.

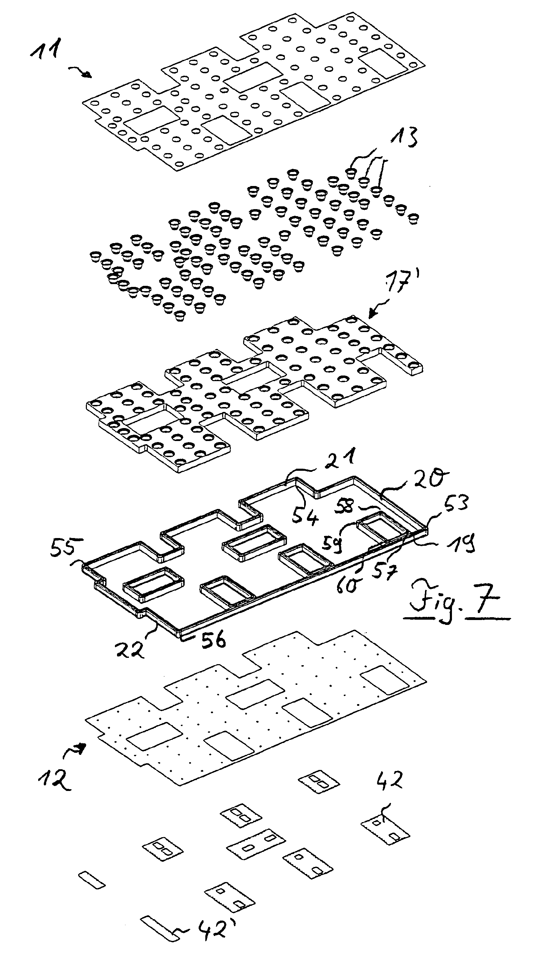

Fig. 9 zeigt eine vergrößerte Ansicht eines Seitenprofils 20, in das eine Außenecke 53 einsteckbar ist. Außerdem ist eine Innenecke 57 in vergrößerter Ansicht dargestellt. Aus Fig. 9 ist erkennbar, daß mit Seitenprofilen 19, ..., 22 bzw. Seitenprofilen 31, ..., 34 und den Außenecken 53, ..., 56 bzw. Innenecken 57, ..., 60 nahezu jede beliebige Kontur einer Kugelmatte erreicht werden kann.

### Bezugszeichenliste

- 11: Deckplatte
- 12: Bodenplatte
- 13: Halterung
- 14: Kugel
- 15: Kugelelemente
- 16: Innenraum
- 17, 17': geschäumter Körper, Füllkörper
- 18: Öffnungen
- 19, ..., 22: Seitenprofile
- 23, 24: Anlageflächen
- 25, 26: Innenseiten
- 27: Oberseite (Seitenprofile)
- 28: Unterseite (Seitenprofile)
- 29: ringförmiger Vorsprung
- 30: Aussparungen
- 31, ..., 34: Seitenprofile (Aussparungen)
- 35: Riegelelement
- 36: Nut
- 37: Einrichtungen zur Abdichtung
- 38, ..., 40: Wannen
- 41: Bohrung
- 42, 42': Befestigungsplatte
- 43: Bolzen
- 44, ..., 46: Unterseite (der Wannen)
- 47, ..., 49: Öffnungen
- 50: Antriebseinheit
- 51, 52: Seitenprofile (Wanne)
- 53, ..., 56: Außenecke
- 57, ..., 60: Innenecke

## Patentansprüche

1. Kugelmatte für das Verladedeck eines Flugzeugs zur Aufnahme und zum Verschieben von Fracht, wobei die Kugelmatte umfasst:
- eine Deckplatte (11),
- eine Bodenplatte (12), welche im Wesentlichen parallel zur Deckplatte (11) verläuft,
- eine Mehrzahl von Halterungen (13), in die Kugeln (14) oder Kugelelemente (15) einsetzbar sind,
- wobei die Deckplatte zum Einsetzen der Halterungen für die Kugeln (14) oder Kugelelemente (15) Öffnungen (18) aufweist,
- wobei zwischen Deckplatte (11) und Bodenplatte (12) ein Innenraum (16) definiert ist, in dem die Halterungen (13) eingesetzt sind und der zur Erhöhung der Stabilität der Kugelmatte und/oder zur Verhinderung des Eindringens bzw. Ausbreitens von Feuchtigkeit ausgeschäumt ist,
**dadurch gekennzeichnet , dass**
die Halterungen (13) für die Kugeln (14) oder Kugelelemente (15) als Beabstandungselemente zwischen der Deckplatte (11) und der Bodenplatte (12) ausgebildet sind und die Kugelmatte versteifen.

2. Kugelmatte nach Anspruch 1,
**dadurch gekennzeichnet , daß** Seitenprofile (19, ..., 22) vorgesenen sind, die an ihrer Oberseite (27) und/oder ihrer Unterseite (28) bündig mit den Außenseiten von Deckplatte (11) bzw. Bodenplatte (12) abschlie-βen.

3. Kugelmatte nach einem der vorhergehenden Ansprüche,
**dadurch gekennzeichnet , daß**
die Halterungen (13) Einrichtungen (37, 29) zur Abdichtung gegenüber der Deckplatte (11) und/oder der Bodenplatte (12) aufweisen.

4. Kugelmatte nach einem der Ansprüche 1 bis 3,
**dadurch gekennzeichnet , daß**
an der Bodenplatte (12) zugewandten Unterseite der Halterung (13) für die Kugeln (14) oder die Kugelelemente (15) ein ringförmiger, konzentrisch zur Achse (A) der Halterung (13) verlaufender Vorsprung (29) zur Anlage an der Innenseite (26) der Bodenplatte (12) ausgebildet ist.

5. Kugelmatte nach einem der vorhergehenden Ansprüche,
**dadurch gekennzeichnet , daß**
in der Kugelmatte rechteck- oder winkelförmige Aussparungen (30) vorgesehen sind, die seitlich durch vorzugsweise dichtend abschließende Seitenprofile (31, ..., 34) begrenzt sind.

6. Kugelmatte nach Anspruch 5,
**dadurch gekennzeichnet , daß**
in die Aussparungen (30) ein Riegelelement (35) einsetzbar ist, das vorzugsweise auch zur Verankerung der Kugelmatte an einem Boden eines Flugzeugs ausgebildet ist.

7. Kugelmatte nach Anspruch 2,
**dadurch gekennzeichnet , daß**
die Seitenprofile (19, ..., 22, 31, ..., 34), insbesondere die Seitenprofile (31, ..., 34) in den Aussparungen (30) an ihrer dem Innenraum (16) abgewandten Seite eine in Längsrichtung der Seitenprofile verlaufende Nut (36) aufweisen.

## Claims

1. Ball mat for the loading deck of an aircraft, for accommodating and moving freight, wherein the ball mat comprises:
- a cover plate (11),
- a base plate (12) running essentially parallel to the cover plate (11),
- a plurality of mountings (13), into which balls (14) or ball elements (15) can be inserted,
- wherein the cover plate has openings (18) for inserting the mountings for the balls (14) or ball elements (15),
- wherein between the cover plate (11) and the base plate (12) an interior space (16) is defined, in which the mountings (13) are inserted and which is filled with foam to make the ball mat more stable and/or prevent moisture from infiltrating or spreading,
**characterised in that**
the mountings (13) for the balls (14) or ball elements (15) are configured as spacing elements between the cover plate (11) and the base plate (12) and stiffen the ball mat.

2. Ball mat according to claim 1, ,
**characterised in that**
side profiles (19, ..., 22) are provided which are flush on their upper side (27) and/or their lower side (28) with the outside of cover plate (11) or base plate (12).

3. Ball mat according to one of the previous claims,
**characterised in that**
the mountings (13) have devices (37, 29) for sealing them with respect to the cover plate (11) and/or base plate (12).

4. Ball mat according to one of the claims 1 to 3,
**characterised in that**
on the underside of the mounting (13) facing the base plate (12) for the balls (14) or ball elements (15) an annular projection (29) running concentrically with the axis (A) of the mounting (13) is configured for positioning against the inner side (26) of the base plate (12).

5. Ball mat according to one of the previous claims,
**characterised in that**
rectangular or angular recesses (30) are provided in the ball mat, which are bounded laterally by means of preferably sealing side profiles (31, ..., 34).

6. Ball mat according to claim 5,
**characterised in that**
a locking element (35) can be inserted in the recesses (30), which preferably is also configured for anchoring the ball mat to a floor of an aircraft.

7. Ball mat according to claim 2,
**characterised in that**
the side profiles (19, ..., 22, 31, ..., 34), in particular the side profiles (31, ..., 34) in the recesses (30) on the side facing the interior space (16), have a groove (36) running in the longitudinal direction of the side profiles.

## Revendications

1. Tapis à billes pour le pont de chargement d'un avion, destiné à recevoir et à déplacer les charges, le tapis à billes comportant :
- une plaque de recouvrement (11),
- une plaque de fond (12) qui est sensiblement parallèle à la plaque de recouvrement (11),
- une pluralité de fixations (13), dans lesquelles peuvent être insérées des billes (14) ou éléments pour billes (15),
- la plaque de recouvrement comportant des orifices (18) destinés à recevoir les fixations pour les billes (14) ou éléments pour billes (15),
- la plaque de recouvrement (11) et la plaque de fond (12) définissant entre elles un espace intérieur (16), dans lequel sont insérées les fixations (13) et lequel est expansé en vue d'augmenter la stabilité du tapis à billes et/ou en vue d'empêcher la pénétration ou la propagation de l'humidité,
**caractérisé en ce que** les fixations (13) pour les billes (14) ou éléments pour billes (15) sont conçues sous forme d'éléments d'écartement entre la plaque de recouvrement (11) et la plaque de fond (12) et rigidifient le tapis à billes.

2. Tapis à billes selon la revendication 1, **caractérisé en ce qu'**il est prévu des profilés latéraux (19, ..., 22) dont la face supérieure (27) et/ou la face inférieure (28) est assemblée à fleur avec les faces extérieures de la plaque de recouvrement (11) et de la plaque de fond (12).

3. Tapis à billes selon l'une quelconque des revendications précédentes, **caractérisé en ce que** les fixations (13) comportent des dispositifs (37, 29) destinés à assurer l'étanchéité par rapport à la plaque de recouvrement (11) et/ou la plaque de fond (12).

4. Tapis à billes selon l'une quelconque des revendications 1 à 3, **caractérisé en ce qu'**une saillie (29) annulaire, qui est disposée concentriquement à l'axe (A) de la fixation (13) et est destinée à venir en appui sur la face intérieure (26) de la plaque de fond (12), est réalisée pour les billes (14) ou les éléments pour billes (15) sur la face inférieure, orientée vers la plaque de fond (12), de la fixation (13).

5. Tapis à billes selon l'une quelconque des revendications précédentes, **caractérisé en ce que** dans le tapis à billes il est prévu des évidements (30) rectangulaires ou angulaires qui sont délimités sur les cotés par des profilés latéraux (31, ...,34) formant de préférence une bordure étanche.

6. Tapis à billes selon la revendication 5, **caractérisé en ce qu'**un élément de retenue (35) peut être inséré dans les évidements (30), lequel est conçu de préférence pour l'ancrage du tapis à billes sur le plancher d'un avion.

7. Tapis à billes selon la revendication 2, **caractérisé en ce que** les profilés latéraux (19, ..., 22, 31, ..., 34), en particulier les profilés latéraux (31, ..., 34) dans les évidements (30), comportent une rainure (36) qui est ménagée sur leur face opposée à l'espace intérieur (16) et est orientée dans le sens longitudinal des profilés latéraux.
